# EUROPÄISCHE PATENTSCHRIFT

(11) **EP 0 613 432 B1**
(45) Veröffentlichungstag und Bekanntmachung des Hinweises auf die Patenterteilung: **17.05.1995**
(21) Anmeldenummer: 92922146.3
(22) Anmeldetag: 22.10.1992
(51) Int. Cl.: B60T 13/74, B60T 7/12, B60T 8/00

(54) **ANTRIEBS- UND BREMSANORDNUNG FÜR EIN KRAFTFAHRZEUG**
DRIVE AND BRAKING ARRANGEMENT FOR A MOTOR VEHICLE
DISPOSITIF D'ENTRAINEMENT ET DE FREINAGE D'UN VEHICULE AUTOMOBILE

(30) Priorität: 29.11.1991 DE 4139443
(43) Veröffentlichungstag der Anmeldung: 07.09.1994
(73) Patentinhaber: FICHTEL & SACHS AG, D-97424 Schweinfurt (DE)
(72) Erfinder: ADLER, Uwe, D-8720 Schweinfurt (DE); DREXL, Hans-Jürgen, D-8724 Schonungen/Mgb. (DE); LUTZ, Dieter, D-8720 Schweinfurt (DE); NAGLER, Franz, D-8729 Ottendorf (DE); OCHS, Martin, D-8720 Schweinfurt (DE); SCHIEBOLD, Stefan, D-8720 Schweinfurt (DE); SCHMIDT-BRÜCKEN, Hans-Joachim, D-8712 Geldersheim (DE); THIELER, Wolfgang, D-8728 Hassfurt (DE); WAGNER, Michael, D-8721 Niederwerrn (DE); WESTENDORF, Holger, D-8721 Hambach (DE); WYCHNANEK, Rainer, D-97532 Üchtelhausen (Madenhausen) (DE)
(74) Vertreter: Meissner, Peter E., Dipl.-Ing.
(86) Internationale Anmeldenummer: DE9200907
(87) Internationale Veröffentlichungsnummer: WO9311014

(56) Entgegenhaltungen:
- WO-A-91/15378
- DE-A- 3 421 854
- DE-A- 3 618 532
- DE-A- 3 829 024
- DE-A- 3 909 907

## Beschreibung

Die Erfindung betrifft eine Antriebs- und Bremsanordnung für ein Kraftfahrzeug, umfassend wenigstens einen das Kraftfahrzeug abhängig von der Einstellung eines Fahrpedals antreibenden Elektromotor, eine die Antriebsdrehrichtung des Elektromotors bzw. der Elektromotore einstellende Vorwärts-Rückwärts-Fahrtrichtungs-Wähleinrichtung, Mittel zur Erfassung der Fahrgeschwindigkeit des Kraftfahrzeugs und eine auf zumindest ein Rad des Kraftfahrzeugs wirkende Reibungs-Bremsanordnung.

Kraftfahrzeuge mit von Elektromotoren angetriebenen Rädern, wie sie beispielsweise aus "VDI-Berichte", Nr. 878, 1991, Seiten 611 bis 622 bekannt sind, können auf einer ansteigenden Fabrbahn ähnlich herkömmlichen Kraftfahrzeugen mit Automatikgetriebe durch Drücken des Fahrpedals mittels der Elektromotore am Zurückrollen gehindert werden. Da die Elektromotore das Antriebsmoment, durch das das Kraftfahrzeug am Zurückrollen gehindert wird, im Stillstand aufbringen müssen, fließt ein vergleichsweise hoher Motorstrom, der zu Überhitzung und Zerstörung der Elektromotore führen kann.

Aus der DE-A-32 38 196 ist es bekannt, Kraftfahrzeuge mit automatischem Getriebe mittels einer automatischen Feststellbremse am "Kriechen" im Leerlauf zu hindern. Die automatische Feststellbremse umfaßt einen die Bremsanlage des Kraftfahrzeugs betätigenden Stellantrieb, der in eine Bremsstellung gesteuert wird, wenn die Fahrgeschwindigkeit unterhalb eines nahe bei null liegenden Grenzwerts liegt und das Bremspedal und das Fahrpedal nicht betätigt sind. Die Feststellbremse wird wieder gelöst, wenn das Gaspedal und/oder das Bremspedal betätigt wird.

Weiterhin ist aus der DE 39 09 907 A1 eine Feststellbremse für ein Kraftfahrzeug mit herkömmlichem mechanischem Antriebsstrang bekannt, bei dem sich die Feststellbreme selbsttätig in eine Bremsstellung bringt, sobald die tatsächliche Raddrehrichtung nicht in Übereinstimmung mit der gewählten Fahrstufe des Schaltgetriebes steht, und die sich selbsttätig löst, sobald die Raddrehrichtung mit der gewählten Fahrstufe übereinstimmt. Damit wird eine Komfortsteigerung erzielt, da die Feststellbremse ohne Zutun des Fahrers automatisch betätigt wird, d. h. geschlossen oder gelöst wird, sobald sich das Kraftfahrzeug in einer Park- oder Fahrsituation befindet, die das Schließen bzw. Öffnen der Feststellbremse erfordert. Hierzu ist das Kraftfahrzeug ausgestattet mit:
- Einem das Fahrzeug abhängig von der Fahrpedalstellung über ein Automatikschaltgetriebe antreibendem Verbrennungsmotor,
- einer Vorwärts-Rückwärts-Wähleinrichtung,
- Mitteln zur Erfassung der Fahrzeuggeschwindigkeit,
- einer auf die Räder einer Achse wirkenden Feststellbremse,
- einem Stellantrieb zur Einstellung der Bremskraft der Feststellbremse und
- einer elektronischen Steuerung, die den Stellantrieb in der oben beschriebenen Weise betätigt.

Bei diesem bekannten Fahrzeug ist keine Abhängigkeit der Betätigung der Feststellbremse von der Einstellung des Fahrpedals vorgesehen. Ein besonderer Schutz des Antriebssystems für den Fall, daß das Fahrzeug beispielsweise an einer Steigung über das Antriebsmoment des Antriebssystems, also motorisch im Stillstand gehalten wird, ist nicht vorgesehen und auch nicht erforderlich.

Es ist Aufgabe der Erfindung, eine Antriebs- und Bremsanordnung für ein elektromotorisch angetriebenes Kraftfahrzeug anzugeben, die nicht nur die Bedienung des Kraftfahrzeugs beim Anfahren an einer Steigung erleichtert, sondern auch die Gefahr einer Beschädigung der Antriebsanordnung vermeidet.

Ausgehend von der eingangs erläuterten Antriebs- und Bremsanordnung wird diese Aufgabe erfindungsgemäß dadurch gelöst, daß die Reibungs-Bremsanordnung einen die Bremskraft steuernden Stellantrieb unfaßt und eine elektronische Steuerung den Stellantrieb in eine Bremsstellung steuert, wenn das Fahrpedal länger als eine vorbestimmte Zeitspanne in eine Fahrstellung gestellt und zugleich die erfaßte Fährgeschwindigkeit null ist, und/oder wenn der Steuerung zugeordnete Mittel eine tatsächliche Bewegungsrichtung des Kraftfährzeugs erfassen, die der an der Wähleinrichtung gewählten Fahrtrichtung entgegengesetzt ist.

Bei einer solchen Antriebs- und Bremsanordnung wird das Kraftfahrzeug in Fahrsituationen automatisch gebremst, die zu einer Überlastung der Elektromotore führen können. Der Stellantrieb wird in seine Bremsstellung gestellt wenn durch Betätigen des Fahrpedals die Elektromotore im Stiltstand eingeschaltet sind oder beim Zurückrollen ein der Drehrichtung entgegengesetztes Moment erzeugen. In beiden Fällen wird die Bedienung des Kraftfahrzeugs erleichtert.

Die Bremse wird abhängig von der Fahrpedalstellung wieder gelöst. Der Steuerung können hierzu Mittel zugeordnet sein, die ein von dem Elektromotor bzw. den Elektromotoren aufgebrachtes Antriebsmoment erfassen, wobei die Steuerung den stellantrieb in eine Bremslösestellung steuert, wenn das erfaßte Antriebsmoment großer als ein vorgegebener Wert ist. Auf diese Weise wird die Bremse erst dann gelöst, wenn die Elektromotore ein ausreichend hohes Antriebsmoment aufgebaut haben.

Um möglichst komfortabel und ruckfrei an einer Steigung anfahren zu können, sind der Steuerung Mittel zugeordnet, die bei Fahrzeugstillstand Daten ermitteln, die ein von dem Elektromotor bzw. den Elektromotoren im Stillstand aufgebrachtes Haltemoment repräsentieren und die die ermittelten Momentendaten in einem Datenspeicher speichern.

Die Steuerung steuert den Stellantrieb in eine Bremslösestellung, wenn an dem Fahrpedal ein Motormoment eingestellt ist, das den gespeicherten Wert des Haltemoments übersteigt. Auch hier wird zweckmäßigerweise das tatsächlich von den Elektromotoren aufgebrachte Antriebsmoment erfaßt und mit dem gespeicherten Wert verglichen.

Schließlich kann in einer weiteren Variante, durch die das Zurückrollen des Fahrzeugs beim Anfahren an einer Steigung verhindert werden kann, vorgesehen sein, daß die Steuerung den Stellantrieb lediglich dann in eine Bremslösestellung steuert, wenn das Fahrpedal in eine Fahrstellung gestellt ist und die an dem Fahrtrichtungs-Wählschalter gewählte Fahrtrichtung und die tatsächliche Bewegungsrichtung übereinstimmen. Auch in dieser Variante wird sichergestellt, daß die Bremse erst dann gelöst wird, wenn das von den Elektromotoren aufgebrachte Antriebsmoment größer als das Bremsmoment ist.

Für einen möglichst komfortablen und ruckfreien Anfahrvorgang kann vorgesehen sein, daß die Steuerung den Stellantrieb mit einer entsprechend einer vorbestimmten Kennlinie zeitabhängig und/oder abhängig von der Einstellung des Fahrpedals und/oder abhängig von einer Änderung der Fahrgeschwindigkeit des Kraftfahrzeugs sich ändernden Stellgeschwindigkeit in eine Bremslösestellung steuert. Wird beispielsweise beim Anfahren die Stellgeschwindigkeit des Stellantriebs kontinuierlich erhöht, so kann ruckfrei angefahren werden, und zugleich wird die Bremsanordnung geschont. Übermäßig langes Schleifen der Bremse kann verhindert werden, wenn die Stellgeschwindigkeit mit zunehmender Auslenkung des Fahrpedals oder zunehmender Fahrgeschwindigkeit erhöht wird.

Es wäre denkbar, daß die Steuerung den Stellantrieb stets in die Stellung maximalen Bremsmoments stellt. Eine solche Betriebsweise sorgt zwar sicher für ein ausreichendes Bremsmoment, verkürzt aber unter Umständen aufgrund der erhöhten mechanischen Beanspruchung die Lebensdauer des Stellglieds und der Bremsanordnung. In einer bevorzugten Ausgestaltung ist deshalb vorgesehen, daß der Steuerung Mittel zugeordnet sind, die bei Fahrzeugstillstand Daten ermitteln, welche ein von dem Elektromotor bzw. den Elektromotoren im Stillstand aufgebrachtes Haltemoment und/oder ein an einer manuell betätigbaren Bedienungseinrichtung der Reibungs-Bremsanordnung eingestelltes Bremsmoment repräsentieren und die die ermittelten Momentendaten in einem Datenspeicher speichern. Die Steuerung steuert den Stellantrieb dann in eine Bremsstellung, in der das Bremsmoment der Reibungs-Bremsanordnung gleich oder um einen vorgegebenen Wert größer als das den gespeicherten Momentendaten entsprechende Moment ist. Auf diese Weise wird an der Bremsanordnung nur das für die jeweilige Fahrsituation erforderliche Bremsmoment eingestellt, was neben der geringeren mechanischen Beanspruchung der Bremsanordnung und ihres Stellantriebs den Vorteil hat, daß die Bremse beim Anfahren rascher gelöst werden kann.

Da nicht alle Fahrsituationen es erlauben, beim Anhalten ein Bremsmoment zu ermitteln und zu speichern, ist in einer zweckmäßigen Variante vorgesehen, daß die Steuerung den Stellantrieb in eine vorbestimmte Bremsstellung steuert, in der das Bremsmoment kleiner als das maximale Bremsmoment der Reibungs-Bremsanordnung ist. Auch in dieser Variante wird die Bremsanordnung vergleichsweise wenig mechanisch beansprucht und kann rascher gelöst werden.

Da sich die Bremswirkung der Bremsanordnung zeitabhängig ändern kann, ist in einer bevorzugten Ausgestaltung vorgesehen, daß die Steuerung bei in die Bremsstellung gesteuerter Reibungs-Bremsanordnung die Reibungs-Bremsanordnung in eine Stellung maximalen Bremsmoments steuert, wenn in einer Ruhestellung des Fahrpedals die erfaßte Fahrgeschwindigkeit > 0 ist. Die maximale Bremswirkung wird auf diese Weise nur dann eingestellt, wenn sich das im normalen Betrieb eingestellte Bremsmoment als unzureichend erweisen sollte. Diese Betriebsweise ist insbesondere dann von Vorteil, wenn die Bremsanordnung zugleich als Parkbremse des Kraftfahrzeugs ausgenutzt wird.

Die Möglichkeit, das Kraftfahrzeug bei Stillstand automatisch zu bremsen, kann für eine Diebstahlsicherungsfunktion ausgenutzt werden, wenn der Steuerung auf Schlüsselgeheimnisinformationen oder einen Schlüssel ansprechende Berechtigungsprüfmittel zugeordnet sind und die Steuerung des Stellantrieb lediglich bei Berechtigung in eine Bremslösestellung steuert. Bei den Berechtigungsprüfmitteln kann es sich um ein herkömmliches schlüsselbetätigtes Schloß aber auch um einen Kartenleser oder eine Eingabetastatur für einen Kode handeln.

Bei normalem Betrieb des Kraftfahrzeugs ist die Rate, mit der Bremszyklen der vorstehenden Art aufeinanderfolgen, gering. Andererseits muß jedoch der Stellantrieb in der Lage sein, die Bremsanordnung rasch in ihre Bremsstellung zu stellen. Um die Antriebsleistung des Stellantriebs möglichst klein zu halten, ist deshalb zweckmäßigerweise vorgesehen, daß dem Stellantrieb ein Energiespeicher, insbesondere ein Federspeicher oder ein Fluid-Druckspeicher zugeordnet ist und der Stellantrieb die zur Einstellung der Bremsstellung der Reibungs-Bremsanordnung erforderliche Energie aus dem Energiespeicher entnimmt. Beispielsweise kann der Federspeicher des Stellantriebs von einem vergleichsweise kleinen Elektromotor langsam aufgezogen werden. Wird hingegen der Stellantrieb in die Bremsstellung gesteuert, so unterstützt der Federspeicher den Aufzugsmotor. Die Verwendung eines mechanischen Energiespeichers hat darüberhinaus den Vorteil, daß die Bremsanordnung auch bei abgeschalteter Zündung servounterstützt in die Bremsstellung gestellt werden kann.

Die zur Steuerung der Bremsanordnung benutzten Komponenten lassen sich zur Erhöhung der Sicherheit des elektromotorisch angetriebenen Kraftfahrzeugs gegen Fehlbedienungen ausnutzen. In einer zweckmäßigen Ausgestaltung ist hierzu vorgesehen, daß eine die Antriebsdrehrichtung des Elektromotors bzw. der Elektromotore einstellende Vorwärts-Rückwärts-Fahrtrichtungs-Wähleinrichtung vorgesehen ist und daß Mittel vorgesehen sind, die auf eine Änderung der Einstellung der Wähleinrichtung hin die Änderung der Antriebsdrehrichtung des Elektromotors bzw. der Elektromotore erst nach Erfassen eines Fahrzeugstillstands und/oder nachdem die Steuerung den Stellantrieb in die Bremsstellung gesteuert hat, zulassen.

Die im Vorstehenden erläuterte Reibungs-Bremsanordnung hat die Funktion einer Feststellbremse. Diese Funktion kann dadurch erreicht werden, daß der Stellantrieb zusätzlich auf die durch ein Bremspedal betätigbare Betriebsbremse des Kraftfahrzeugs wirkt. Aus Sicherheitsgründen kann es sich aber auch um eine zusätzliche Bremsanordnung handeln, die sowohl manuell als auch mittels des Stellantriebs betätigbar ist. Um den konstruktiven Aufwand möglichst gering zu halten, sind in einer Ausführungsform, bei welcher die Elektromotore gesonderte Räder des Kraftfahrzeugs antreiben, die Elektromotore jeweils für sich zu einer Baueinheit mit Radbremsen der angetriebenen Räder vereinigt.

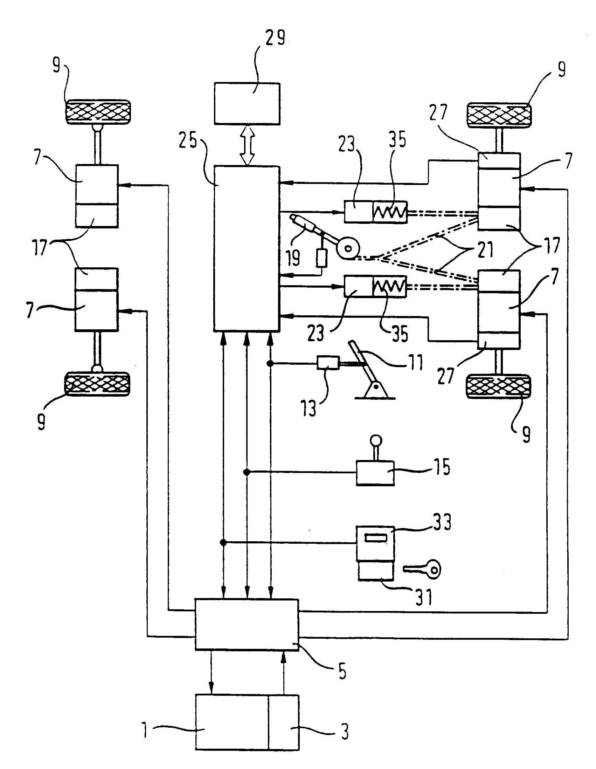

Im folgenden wird die Erfindung anhand einer Zeichnung näher erläutert. Die Zeichnung zeigt ein Blockschaltbild einer erfindungsgemäßen Antriebs- und Bremsanordnung für ein vierradgetriebenes Kraftfahrzeug.

Das Kraftfahrzeug umfaßt eine Brennkraftmaschine 1 mit einer daran angeflanschten Generatoranordnung 3, die über eine elektronische Steuerung 5 Elektromotore 7 an den einzelnen Rädern 9 speist. Die Steuerung 5 steuert einerseits über nicht näher dargestellte Stellantriebe die Leistung der Brennkraftmaschine 1 sowie die von der Generatoranordnung 3 den Elektromotoren 7 zugeführte elektrische Leistung abhängig von der Einstellung eines Fahrpedals 11, dessen Einstellung von einem Positionssensor 13 erfaßt wird. Die Drehrichtung der Elektromotore 7 und damit die Fahrtrichtung des Kraftfahrzeugs wird von einer manuell bedienbaren Wähleinrichtung 15 festgelegt, über die der Fahrer zwischen Vorwärts- oder Rückwärtsfahrtrichtung umschalten kann. Über das Fahrpedal 11 bestimmt der Fahrer das von den Elektromotoren 7 an den einzelnen Rädern 9 erzeugte Drehmoment und/oder die Drehzahl der Elektromotore 7.

Die Elektromotore 7 bilden jeweils eine Baueinheit mit Radbremseinrichtungen 17 einer im übrigen nicht näher dargestellten, über ein Bremspedal betätigbaren Betriebsbremsanordnung des Kraftfahrzeugs. Auf einen Teil der Radbremsanordnungen 17, hier die der hinteren Räder 9, wirkt zusätzlich eine herkömmliche Feststellbremsanordnung, deren manuell betätigbarer Handbremshebel 19 über eine mechanische oder hydraulische Kraftübertragungseinrichtung 21 mit den Radbremsanordnungen 17 dieser Räder 9 verbunden ist. Die Feststellbremsanordnung kann auf die Radbremsanordnungen 17 der Betriebsbremse wirken oder auf gesonderte Radbremsanordnungen.

Ein Kraftfahrzeug der vorstehend erläuterten Art könnte an einer Steigung auch im Stillstand durch Betätigen des Fahrpedals 11 und ohne Betätigung der Betriebsbremse oder der Feststellbremse gehalten und am Zurückrollen gehindert werden. Das im Stillstand von den Elektromotoren 7 erzeugte Haltemoment führt zu einer starken Erwärmung der Elektromotore 7 und unter Umständen zu deren Zerstörung. Um die Elektromotore 7 im Stillstand von dem Haltemoment zu entlasten, sind den Radbremsanordnungen 17 entweder der Betriebsbremse oder der Feststellbremse Stellantriebe 23 zugeordnet, die von einer Bremssteuerung 25 gesteuert werden. Die Bremssteuerung 25 spricht auf Informationen von an den Elektromotoren 7 bzw. den von den Elektromotoren 7 angetriebenen Rädern 9 angeordneten Sensoren 27 an, die Daten über die Drehzahl der Räder 9 und damit die Fahrgeschwindigkeit und/oder Daten über das von den Elektromotoren 7 aufgebrachte Antriebsdrehmoment liefern. Die Drehmomentdaten lassen sich insbesondere aus der von den Elektromotoren 7 aufgenommenen elektrischen Leistung errechnen, so daß diese Daten gegebenenfalls auch aus der Steuerung 5 zugeführt werden können. Die Bremssteuerung 25 erfaßt das bei der Fahrgeschwindigkeit null von den Elektromotoren 7 aufgebrachte Haltemoment und stellt die Stellantriebe 23 auf ein Bremsmoment ein, das dem Haltemoment der Elektromotore 7 entspricht oder aus Sicherheitsgründen dieses Haltemoment um einen vorbestimmten Wert übersteigt. Die Stellantriebe 23 werden jedoch erst dann in ihre Bremsstellung gestellt, wenn das Fahrpedal 11 länger als eine vorbestimmte Zeitspanne von beispielsweise einer Sekunde und gleichzeitig andauerndem Fahrzeugstillstand gedrückt war. Die Daten des zuletzt erfaßten Haltemoments der Elektromotore 7 werden in einem Datenspeicher 29 gespeichert, worauf die Elektromotore 7 trotz betätigtem Fahrpedal 11 abgeschaltet werden.

Zum Wiederanfahren muß das Fahrpedal 11 über die zuletzt eingestellte Stellung hinaus gedrückt werden und sich an den Elektromotoren 7 ein Drehmoment aufbauen, welches den im Datenspeicher 29 gespeicherten Wert übersteigt. Die Bremssteuerung 25 steuert die Stellantriebe 23 in Bremslöserichtung, sobald das von den Elektromotoren 7 aufgebrachte Antriebsmoment den gespeicherten Wert des Bremsmoments übersteigt. Die Bremse wird jedoch entsprechend einer vorbestimmten Zeitfunktion gelöst, mit der Folge, daß sich das Kraftfahrzeug zunächst geringfügig in Bewegung setzen kann. Dies ermöglicht es der Bremssteuerung 25, von den Sensoren 27 gelieferte Drehzahlinformationen, die auch Informationen über die tatsächliche Drehrichtung der Elektromotore und damit Informationen über die tatsächliche Bewegungsrichtung des Kraftfahrzeugs umfassen, mit Informationen über die an der Wähleinrichtung 15 eingestellten Fahrtrichtung zu vergleichen. Die Bremssteuerung 25 löst die Bremse lediglich dann weitergehend, wenn die tatsächliche Bewegungsrichtung mit der gewählten Fahrtrichtung übereinstimmt. Stimmen die tatsächliche Bewegungsrichtung und die gewählte Fahrtrichtung nicht überein, so werden die Stellantriebe 23 erneut in Richtung Bremskrafterhöhung gesteuert. Das Fahrzeug wird damit an einer Steigung am Zurückrollen gehindert.

Die Geschwindigkeit, mit der die Bremssteuerung 25 die Stellantriebe 23 in Bremslösestellung steuert, kann von einer vorbestimmten zeitabhängigen Kennlinie abhängen und darüber hinaus oder alternativ auch proportional zur Betätigungsgeschwindigkeit des Fahrpedals 11 gesteuert werden. Durch Vorgabe der Bremslösegeschwindigkeit läßt sich der Anfahrkomfort erhöhen und ein Anfahrruck vermeiden.

Anders als bei herkömmlichen Kraftfahrzeugen mit über ein mechanisches Getriebe angetriebenen Rädern, muß das vorstehend erläuterte, elektromotorisch angetriebene Kraftfahrzeug beim Parken über die Feststellbremse gegen ungewolltes Wegrollen gesichert werden. Die Bremssteuerung 25 erlaubt einen automatischen Parksicherungsbetrieb und steuert die Stellantriebe 23 in eine Bremsstellung, wenn die Sensoren 27 den Fahrzeugstillstand feststellen, zugleich der Positionssensor 13 erfaßt, daß sich das Fahrpedal 11 in seiner nicht betätigten Ruhestellung befindet und darüber hinaus ein bei 31 angedeutetes Zündschloß in seine Parkstellung gestellt ist. Auch hier steuert die Bremssteuerung 25 die Stellantriebe 23 in eine Stellung, in der das Bremsmoment gleich dem zuletzt von den Elektromotoren 7 aufgebrachten Haltemoment ist, mindestens jedoch auf einen vorbestimmten Bremsmomentwert. Der Bremsmomentwert wird zweckmäßigerweise so gewählt, daß er kleiner ist als das maximale Bremsmoment der Bremsanordnungen 17, jedoch unter normalen Betriebsumständen ein sicheres Halten des Kraftfahrzeugs gewährleistet. Die Wahl eines Bremsmomentwerts kleiner als das maximale Bremsmoment erlaubt eine Verkürzung der Bremslösezeit und schont die Bremsanordnung. Stellt jedoch die Bremssteuerung 25 nachfolgend an das Einstellen der Stellantriebe 23 fest, daß das Kraftfahrzeug erneut zu rollen beginnt, so werden die Stellantriebe 23 in die Stellung maximalen Bremsmoments gesteuert. Beim Anfahren wird wiederum der Stellantrieb nur dann vollständig in die Bremslösestellung gesteuert, wenn das von den Elektromotoren 7 nach Betätigung des Fahrpedals 11 aufgebrachte Antriebsmoment den Wert des im Datenspeicher 29 gespeicherten Bremsmoments übersteigt und die tatsächliche Bewegungsrichtung des Kraftfahrzeugs mit der an der Wählanordnung 15 eingestellten Fahrtrichtung übereinstimmt. Die Bremslösegeschwindigkeit kann auch hier zeitabhängig oder abhängig von der Fahrpedalstellung gesteuert werden.

Das Zündschloß 31 oder eine dem Zündschloß 31 zugeordnete Berechtigungsprüfeinrichtung 33, wie zum Beispiel ein Kodekartenlesegerät oder eine Kodeeingabetastatur kann zur Diebstahlsicherung des Kraftfahrzeugs ausgenutzt werden, indem die Bremssteuerung 25 die für das Parken in Bremsstellung gesteuerten Stellantriebe 23 nur dann in Bremslösestellung steuert, wenn der zum Zündschloß 31 passende Zündschlüssel benutzt oder die richtige Schlüsselgeheimnisinformation an dem Berechtigungsprüfgerät 33 eingegeben wurde.

Jeder der Stellantriebe 23 umfaßt einen Energiespeicher 35, beispielsweise einen Federspeicher, der von einem nicht näher dargestellten Elektromotor des Stellantriebs 23 beim Lösen der Bremse oder auch zwischen aufeinanderfolgenden Bremszyklen aufgezogen wird und die zum Betätigen der Radbremsanordnungen 17 von dem Stellantrieb 23 aufzubringende Kraft entweder vollständig liefert oder den Stellantrieb 23 hierbei unterstützt.

Um Fehlbedienungen der Fahrtrichtungs-Wählanordnung 15, beispielsweise unbeabsichtigten Richtungswechsel, auszuschließen, läßt die Steuerung 5 eine Drehrichtungsänderung der Elektromotore 7 erst dann zu, wenn die Bremssteuerung 25 eine Fahrzeuggeschwindigkeit null erkannt und/oder die Stellantriebe 23 kurzzeitig in eine das Haltemoment aufbringende Bremsstellung gestellt wurden. Es versteht sich, daß aus Sicherheitsgründen bei Fahrgeschwindigkeiten > 0 die Stellantriebe 23 von der Bremssteuerung 25 nicht betätigbar sind, die Feststellbremse vielmehr nur auf die manuelle Betätigung des Handbremshebels 19 reagiert.

Bei dem vorstehend erläuterten Ausführungsbeispiel der Erfindung sind den Radbremsanordnungen 17 gesonderte Stellantriebe 23 zugeordnet, die unabhängig von den manuell betätigbaren Komponenten der Feststellbremse sind, um bei einem Ausfall der Elektronik oder der Energiebereitstellung oder der Stellantriebe 23 die Feststellbremse dennoch von Hand betätigen zu können. Gegebenenfalls kann aber auch mehreren Radbremsanordnungen 17 ein gemeinsamer Stellantrieb zugeordnet sein, der bei geeigneter Gestaltung auch über die Kraftübertragungsmittel 21 auf die Radbremsanordnungen 17 wirken kann. Die Stellantriebe 23 können gegebenenfalls auch zur Unterstützung der Betriebsbremse herangezogen werden, beispielsweise dann, wenn die Bremsleistung der Betriebsbremse durch Verschleiß oder Überhitzung nachlassen sollte.

## Patentansprüche

1. Antriebs- und Bremsanordnung für ein Kraftfahrzeug, umfassend
- wenigstens einen das Kraftfahrzeug abhängig von der Einstellung eines Fahrpedals (11) antreibenden Motor (7),
- eine die Antriebsdrehrichtung einstellende Vorwärts-Rückwärts-Wähleirnichtung (15),
- Mittel zur Erfassung der Fahrgeschwindigkeit des Kraftfahrzeugs,
- eine auf zumindest ein Rad (9) des Kraftfahrzeugs wirkende Reibungs-Bremsanordnung (17),
- einen die Bremskraft der Reibungsbremsanordnung (17) steuernden Stellantrieb (23) und
- eine elektronische Steuerung (25), die den Stellantrieb (23) in eine Bremsstellung steuert, wenn der Steuerung (25) zugeordnete Mittel (27) eine tatsächliche Bewegungsrichtung des Kraftfahrzeugs erfassen, die der an der Wähleinrichtung (15) gewählten Fahrtrichtung entgegengesetzt ist,
dadurch gekennzeichnet, daß der oder die das Kraftfahrzeug antreibenden Motore als Elektromotore (7) ausgebildet sind und daß die elektronische Steuerung (25) den Stellantrieb (23) auch dann in eine Bremsstellung steuert, wenn das Fahrpedal (11) länger als eine vorbestimmte Zeitspanne in eine Fahrstellung gestellt und zugleich die erfaßte Fahrgeschwindigkeit null ist.

2. Anordnung nach Anspruch 1 oder 2, dadurch gekennzeichnet, daß der Steuerung (25) Mittel (27) zugeordnet sind, die ein von dem Elektromotor (7) bzw. den Elektromotoren (7) aufgebrachtes Antriebsmoment erfassen und daß die Steuerung (25) den Stellantrieb (23) in eine Bremslösestellung steuert, wenn das erfaßte Antriebsmoment größer als ein vorgegebener Wert ist.

3. Anordnung nach Anspruch 1 oder 2, dadurch gekennzeichnet, daß der Steuerung (25) Mittel (27) zugeordnet sind, die bei Fahrzeugstillstand Daten ermitteln, die ein von dem Elektromotor (7) bzw. den Elektromotoren (7) aufgebrachtes Haltemoment repräsentieren und die die ermittelten Momentendaten in einem Datenspeicher (29) speichern, und daß die Steuerung (25) den Stellantrieb (23) in eine Bremslösestellung steuert, wenn an dem Fahrpedal (11) ein Motormoment eingestellt ist, das den gespeicherten Wert des Haltemoments übersteigt.

4. Anordnung nach einem der Ansprüche 1 bis 3, dadurch gekennzeichnet, daß die Steuerung (25) den Stellantrieb (23) lediglich dann in eine Bremslösestellung steuert, wenn das Fahrpedal (11) in eine Fahrstellung gestellt ist und die gewählte Fahrtrichtung und die tatsächliche Bewegungsrichtung übereinstimmen.

5. Anordnung nach einem der Ansprüche 1 bis 4, dadurch gekennzeichnet, daß die Steuerung (25) den Stellantrieb (23) mit einer entsprechend einer vorbestimmten Kennlinie zeitabhängig und/oder abhängig von der Einstellung des Fahrpedals (11) und/oder abhängig von einer Änderung der Fahrgeschwindigkeit des Kraftfahrzeugs sich ändernden Stellgeschwindigkeit in eine Bremslösestellung steuert.

6. Anordnung nach einem der Ansprüche 1 bis 5, dadurch gekennzeichnet, daß der Steuerung (25) Mittel zugeordnet sind, die bei Fahrzeugstillstand Daten ermitteln, welche ein von dem Elektromotor (7) bzw. den Elektromotoren (7) aufgebrachtes Haltemoment und/oder ein an einer manuell betätigbaren Bedienungseinrichtung (19) der Reibungs-Bremsanordnung (17) eingestelltes Bremsmoment repräsentieren und die die ermittelten Momentendaten in einem Datenspeicher (29) speichern, und daß die Steuerung (25) den Stellantrieb (23) in eine Bremsstellung steuert, in der das Bremsmoment der Reibungs-Bremsanordnung (17) gleich oder größer als das den gespeicherten Momentendaten entsprechende Moment ist.

7. Anordnung nach Anspruch 6, dadurch gekennzeichnet, daß die Steuerung (25) den Stellantrieb (23) in eine Bremsstellung steuert, in der das Bremsmoment der Reibungs-Bremsanordnung (17) um einen vorbestimmten Wert größer als das den gespeicherten Momentendaten entsprechende Moment ist.

8. Anordnung nach einem der Ansprüche 1 bis 7, dadurch gekennzeichnet, daß die Steuerung (25) den Stellantrieb (23) in eine vorbestimmte Bremsstellung steuert, in der das Bremsmoment kleiner als das maximale Bremsmoment der Reibungs-Bremsanordnung (17) ist.

9. Anordnung nach einem der Ansprüche 6 bis 8, dadurch gekennzeichnet, daß die Steuerung (25) bei in die Bremsstellung gesteuerter Reibungs-Bremsanordnung (17) die Reibungs-Bremsanordnung (17) in eine Stellung maximalen Bremsmoments steuert, wenn in einer Ruhestellung des Fahrpedals (11) die erfaßte Fahrgeschwindigkeit größer null ist.

10. Anordnung nach einem der Ansprüche 1 bis 9, dadurch gekennzeichnet, daß der Steuerung (25) auf Schlüsselgeheimnisinformation oder einen Schlüssel ansprechende Berechtigungsprüfmittel (31, 33) zugeordnet sind und die Steuerung (25) den Stellantrieb (23) lediglich bei Berechtigung in eine Bremslösestellung steuert.

11. Anordnung nach einem der Ansprüche 1 bis 10, dadurch gekennzeichnet, daß dem Stellantrieb (23) ein Energiespeicher (35), insbesondere ein Federspeicher oder ein Fluid-Druckspeicher zugeordnet ist und der Stellantrieb (23) die zur Einstellung der Bremsstellung der Reibungs-Bremsanordnung (17) erforderliche Energie aus dem Energiespeicher (35) entnimmt.

12. Anordnung nach einem der Ansprüche 1 bis 11, dadurch gekennzeichnet, daß eine die Antriebsdrehrichtung des Elektromotors (7) bzw. der Elektromotore (7) einstellende Vorwärts-Rückwärts-Fahrtrichtungs-Wähleinrichtung (15) vorgesehen ist und daß Mittel (25) vorgesehen sind, die auf eine Änderung der Einstellung der Wähleinrichtung (15) hin die Änderung der Antriebsdrehrichtung des Elektromotors (7) bzw. der Elektromotore (7) erst nach Erfassen eines Fahrzeugstillstands und/oder nachdem die Steuerung den Stellantrieb (23) in die Bremsstellung gesteuert hat, zulassen.

13. Anordnung nach einem der Ansprüche 1 bis 12, dadurch gekennzeichnet, daß die Elektromotore (7) gesonderte Räder (9) antreiben und zu einer Baueinheit mit Radbremsen (17) der angetriebenen Räder (9) vereinigt sind.

## Claims

1. Drive and brake arrangement for a vehicle including
- at least one drive motor (7), of a vehicle concerned, which is dependent on an adjustment of a pedal (11),
- a forwards-backwards selection device (15) which sets a direction of drive-rotation,
- means of recording speed of a vehicle concerned,
- a frictional-brake arrangement (17) acting on at least one wheel (9) of a vehicle,
- an adjustment drive (23) which controls braking force of a frictional-brake arrangement (17),
- an electronic control (25), which pilots an adjustment drive (23) into a brake-setting if means (27) associated with a said control (25) record an actual direction of movement of a vehicle which is opposite to that chosen on a selection device (15),
wherein motors which drive a vehicle are developed as electromotors (7) and an electronic control (25) also pilots an adjustment drive (23) into a brake-setting if a pedal (11) is placed in a specific drive-setting for more than a set period of time and, simultaneously, a recorded speed of movement is zero.

2. Arrangement in accordance with claim 1 or 2, wherein means (27) are associated with a control (25) and these means record a driving torque applied by an electromotor (7) or electromotors (7) and a control (25) pilots an adjustment drive (25) into a brake-release setting if a recorded driving torque is larger than a set value.

3. Arrangement in accordance with claim 1 or 2, wherein means (27) are associated with a control (25) and record data, which represent a retaining torque applied by an electromotor (7) or electromotors (7), and store recorded torque-data in a data-memory (29), and a control (25) pilots an adjustment drive (23) into a brake release setting if a driving torque which exceeds a stored value of a retaining torque is introduced on a pedal (11).

4. Arrangement in accordance with any one of claims 1 to 3, wherein a control (25) only pilots an adjustment drive into a brake-release position if a pedal (11) is positioned in a drive setting and a selected direction of movement and an actual direction of movement agree.

5. Arrangement in accordance with any one of claims 1 to 4, wherein a control (25) pilots an adjustment drive (23) into a brake-release setting, with a variable adjustment speed corresponding to a set characteristic curve which is time-dependent and/or dependent on a setting of a pedal (11) and/or dependent on a change of travelling-speed of a vehicle.

6. Arrangement in accordance with any one of claims 1 to 5, wherein means are associated with a control (25) and said means record data, which represent a retaining-torque, applied by an electromotor (7) or electromotors (7), and a braking torque introduced on a manually operated device (19) of a frictional brake arrangement (17), when a vehicle is at rest, and record torque data in a data-memory (29), and a control (25) pilots an adjustment drive (23) into a brake setting in which a braking torque of a frictional brake arrangement (17) is equal to or larger than a torque corresponding to stored torque data.

7. Arrangement in accordance with claim 6, wherein a control (25) pilots an adjustment drive ((23) into brake-setting in which a braking torque of a frictional brake arrangement (17) is greater by a set value than a torque corresponding to stored torque data.

8. Arrangement in accordance with any one of claims 1 to 7, wherein a control (25) pilots an adjustment drive (23) into a set brake-setting in which a braking torque is lower than a maximum braking torque of a frictional brake arrangement (17).

9. Arrangement in accordance with any one of claims 6 to 9, wherein a control (25), with a frictional brake arrangement (17) in a brake setting, pilots a said frictional brake arrangement (17) into a setting of maximum braking torque if, with a pedal (11) in an idle position, a recorded speed is greater than zero.

10. Arrangement in accordance with any one of claims 1 to 9, wherein a control (25) is associated with secret key information or key- recognition means (31, 33), and a said control (25) only pilots an adjustment drive (23) into a brake release setting where there is recognition.

11. Arrangement in accordance with any one of claims 1 to 10, wherein an adjustment drive (23) is associated with a store of energy (35), a spring-based one in particular, or a fluid pressure reservoir and a said adjustment drive (23) draws energy, necessary for adjusting a brake setting of a frictional brake arrangement, from an energy store (35).

12. Arrangement in accordance with any one of claims 1 to 11, wherein a backwards/forwards selection device (15), which sets a direction of drive rotation of an electromotor (7) or electromotors (7), is provided, and means (25) are provided which allow change in a direction of drive rotation of an electromotor (7) or electromotors (7) when there is a change in a setting or a selection device (15), after recording of a state of rest of a vehicle and/or after a control has piloted an adjustment drive (23) into a brake setting.

13. Arrangement in accordance with any one of claims 1 to 12, wherein electromotors (7) drive separate wheels and are combined in one component with wheel-brakes (17) of wheels (9) driven.

## Revendications

1. Dispositif d'entraînement et de freinage pour un véhicule automobile, comportant :
- au moins un moteur (7) entraînant le véhicule automobile de façon dépendant du réglage d'une pédale d'accélérateur (11),
- un dispositif de sélection avant-arrière (15) réglant le sens de rotation de l'entraînement,
- des moyens pour détecter la vitesse de déplacement du véhicule automobile,
- un dispositif de freinage à friction (17) agissant sur au moins une roue (9) du véhicule automobile,
- un entraînement de réglage (23) commandant la force de freinage du dispositif de freinage à friction (17),
- une commande électronique (25) qui commande l'entraînement de réglage (23) dans une position de freinage lorsque des moyens (27), associés à la commande (25), détectent un sens de déplacement effectif du véhicule automobile, qui est opposé au sens de déplacement choisi sur le dispositif de sélection (15),
caractérisé en ce que le ou les moteurs entraînant le véhicule automobile sont réalisés comme des moteurs électriques (7), et en ce que la commande électronique (25) commande l'entraînement de réglage (23) dans une position de freinage également lorsque la pédale d'accélérateur (11) se trouve plus longtemps qu'un intervalle de temps prédéfini dans une position de déplacement et que, en même temps, la vitesse de déplacement détectée est nulle.

2. Dispositif selon la revendication 1 ou 2,
caractérisé en ce que, à la commande (25), sont associés des moyens (27) qui détectent un couple d'entraînement appliqué par le moteur électrique (7) ou les moteurs électriques (7), et en ce que la commande (25) commande l'entraînement de réglage (23) dans une position de desserrage des freins quand le couple d'entraînement détecté est plus grand qu'une valeur prédéfinie.

3. Dispositif selon la revendication 1 ou 2,
caractérisé en ce que, à la commande 25, sont associés des moyens (27) qui, lors de l'arrêt du véhicule, déterminent des données qui représentent un couple d'arrêt appliqué par le moteur électrique (7) ou les moteurs électriques (7) et qui mémorisent les données de couple déterminées dans une mémoire de données (29), et en ce que la commande (25) commande l'entraînement de réglage (23) dans une position de desserrage des freins lorsqu'il est appliqué, sur la pédale d'accélérateur (11), un couple moteur qui dépasse la valeur mémorisée du couple d'arrêt.

4. Dispositif selon une des revendications 1 à 3,
caractérisé en ce que la commande (25) commande l'entraînement de réglage (23) dans une position de desserrage des freins uniquement lorsque la pédale d'accélérateur (11) se trouve dans une position de déplacement et lorsque le sens de déplacement choisi et le sens de déplacement effectif correspondent.

5. Dispositif selon une des revendications 1 à 4,
caractérisé en ce que la commande (25) commande l'entraînement de réglage (23) dans une position de desserrage des freins avec une vitesse de réglage se modifiant de façon correspondant à une caractéristique prédéfinie de façon dépendant du temps et/ou de façon dépendant du réglage de la pédale d'accélérateur (11) et/ou de façon dépendant d'une modification de la vitesse de déplacement du véhicule automobile.

6. Dispositif selon une des revendications 1 à 5,
caractérisé en ce que, à la commande (25), sont associés des moyens qui, lors de l'arrêt du véhicule, déterminent des données, lesquelles représentent un couple d'arrêt appliqué par le moteur électrique (7) ou les moteurs électriques (7) et/ou un couple de freinage réglé sur un dispositif de commande (19) actionné manuellement du dispositif de freinage à friction (17), et qui mémorisent les données de couple déterminées dans une mémoire de données (29), et en ce que la commande (25) commande l'entraînement de réglage (23) dans une position de freinage dans laquelle le couple de freinage du dispositif de freinage à friction (17) est identique ou supérieur au couple correspondant aux données de couple mémorisées.

7. Dispositif selon la revendication 6,
caractérisé en ce que la commande (25) commande l'entraînement de réglage (23) dans une position de freinage dans laquelle le couple de freinage du dispositif de freinage à friction (17) est plus grand, d'une valeur prédéterminée, que le couple correspondant aux données de couple mémorisées.

8. Dispositif selon une des revendications 1 à 7,
caractérisé en ce que la commande (25) commande l'entraînement de réglage (23) dans une position de freinage prédéterminée dans laquelle le couple de freinage est plus petit que le couple de freinage maximal du dispositif de freinage à friction (17).

9. Dispositif selon une des revendications 6 à 8,
caractérisé en ce que la commande (25), lorsque le dispositif de freinage à friction (17) est commandé dans la position de freinage, commande le dispositif de freinage à friction (17) dans une position de couple de freinage maximal, lorsque, dans une position de repos de la pédale d'accélérateur (11), la vitesse de déplacement détectée est supérieure à zéro.

10. Dispositif selon une des revendications 1 à 9,
caractérisé en ce que, à la commande (25), sont associés des moyens de vérification d'autorisation (31,33) correspondant à une clef ou à des informations secrètes à clef, et la commande (25) commande l'entraînement de réglage (23) dans une position de desserrage des freins uniquement lors de l'autorisation.

11. Dispositif selon une des revendications 1 à 10,
caractérisé en ce que, à l'entraînement de réglage (23), il est associé une réserve d'énergie (35), en particulier un accumulateur à ressort ou un accumulateur sous pression à fluide, et l'entraînement de réglage (23) soutire l'énergie nécessaire pour le réglage de la position de freinage du dispositif de freinage à friction (17), à partir de la réserve d'énergie (35).

12. Dispositif selon une des revendications 1 à 11,
caractérisé en ce qu'un dispositif de sélection (15) du sens de déplacement avant-arrière, réglant le sens de rotation de l'entraînement du moteur électrique (7) ou des moteurs électriques (7), est prévu, et en ce que des moyens (25) sont prévus qui, à partir d'une modification du réglage du dispositif de sélection (15), autorisent la modification du sens de rotation de l'entraînement du moteur électrique (7) ou des moteurs électriques (7) uniquement après détection d'un arrêt du véhicule et/ou après que la commande a commandé l'entraînement de réglage (23) dans la position de freinage.

13. Dispositif selon une des revendications 1 à 12,
caractérisé en ce que les moteurs électriques (7) entraînent des roues particulières (9) et sont réunis en une unité avec des freins (17) des roues entraînées (9).
